# EUROPEAN PATENT APPLICATION

(11) **EP 4 819 081 A1**
(43) Date of publication of application: **07.10.2026**
(21) Application number: 23960234.5
(22) Date of filing: 01.12.2023
(51) Int. Cl.: G07C 5/00

(54) **VIDEO COLLECTION DEVICE AND VIDEO COLLECTION SYSTEM**

(71) Applicant: Astemo, Ltd., Chiyoda-ku, Tokyo 1000004 (JP)
(72) Inventor: KAGIMOTO Kento, Hitachinaka-shi, Ibaraki 312-8503 (JP); TOYODA Hidehiro, Hitachinaka-shi, Ibaraki 312-8503 (JP)
(74) Representative: MERH-IP Matias Erny Reichl Hoffmann Patentanwälte PartG mbB
(86) International application number: PCT/JP2023/043123
(87) International publication number: WO 2025/115217

(57) **Abstract**

A video collection device includes an arithmetic device that executes arithmetic processing, and a storage unit that can be accessed by the arithmetic device, in which the arithmetic device includes an event recognition unit configured to recognize an event that has occurred around a host vehicle and an event involved target involved in the event, and the arithmetic device includes an event identification unit configured to protect, as an event video, a video recorded from an event factor occurrence time at which the event involved target has appeared retroactively from a time at which the event has occurred to a time at which the event has occurred, among videos recording surroundings of the host vehicle captured by an imaging device mounted on the host vehicle.

## Description

### Technical Field

The present invention relates to a video collection device and a video collection system that collect a video captured by a vehicle, and particularly relates to a method for recording a video before occurrence of an event.

### Background Art

A drive recorder is a device that records a video of an accident, harm, or the like related to a host vehicle, is mounted on the vehicle, and records a video, sound, or the like around the host vehicle. In particular, when the drive recorder detects an event such as a sudden speed change, the detected event may be used as a trigger to protect data such as a video and a sound so as not to be deleted by overwriting with new data. On the other hand, the sound of the video of the event and the like are useful for grasping an accurate situation and elucidating a cause of the event in which the loss has occurred for the party, and thus, it is desirable that an object to be an event factor is particularly recorded and many records are left in one event. Various methods for recording the event video have been studied, and there are the following documents.

In PTL 1 (JP 2021-51628 A), an event detection unit detects, as events, occurrence of a save trigger event defined as a save trigger of video data, and occurrence of a non-save trigger event that is an event different from the save trigger event and is defined as a target for which detection timing is to be recorded. In a case where a non-save trigger event is detected, the recording control unit records the detection timing. There is described a recording control device that sets, as a storage target, video data including a video at a detection timing of a non-save trigger event and a video at a detection timing of a storage trigger event in a case where the storage trigger event is detected within a waiting period defined in correspondence with the non-save trigger event after the non-save trigger event is detected.

In addition, PTL 2 (JP 2021-43846 A) discloses an electronic device including a video acquisition unit that acquires captured video data from a photographing unit capable of photographing a predetermined range, a storage control unit that stores the acquired video data in a storage unit, a detection unit that detects abnormal video data in which an abnormal event is estimated to be photographed on the basis of the acquired video data, and a protection processing unit that executes data protection of the abnormal video data so that the detected abnormal video data is not overwritten in the video data stored in the storage unit.

### Citation List

### Patent Literatures

PTL 1: JP 2021-51628 A
PTL 2: JP 2021-43846 A

### Summary of Invention

### Technical Problem

The recording control device described in PTL 1 described above sets a video between two events of a trigger event and a marking event in a video recording period as a storage target. The trigger event is an accident itself, and the marking event is an event such as an abnormal sound generated before the trigger event, opening and closing of a door or a window, blinking of light, a change of an occupant, a vertical movement of the vehicle, and a behavior of a surrounding vehicle. Therefore, in a case where an abnormal sound, a vertical movement of the vehicle, or the like, which is not related to the accident, is detected before the accident occurs, there is a possibility that this is recognized as a marking event, and a video which is not related to the accident is protected, and a storage area of the video may be wastefully consumed.

In addition, the electronic device described in PTL 2 accurately protects abnormal video data having a high possibility that an abnormal event is captured among captured video data in response to a request. However, since an abnormal event is determined only by video data, there is a possibility that an image is erroneously recognized and a video other than an accident is recorded.

An object of the present invention is to protect a video from an occurrence timing of an accident factor to an accident as much as necessary.

### Solution to Problem

A representative example of the invention disclosed in the present application is as follows. That is, a video collection device includes an arithmetic device that executes arithmetic processing, and a storage unit that can be accessed by the arithmetic device, in which the arithmetic device includes an event recognition unit configured to recognize an event that has occurred around a host vehicle and an event involved target involved in the event, and the arithmetic device includes an event identification unit configured to protect, as an event video, a video recorded from an event factor occurrence time at which the event involved target has appeared retroactively from a time at which the event has occurred to a time at which the event has occurred, among videos recording surroundings of the host vehicle captured by an imaging device mounted on the host vehicle.

### Advantageous Effects of Invention

According to one aspect of the present invention, it is possible to protect the video from the occurrence timing of the accident factor to the accident with the minimum necessary. Problems, configurations, and effects other than those described above will be clarified by the following description of embodiments for carrying out the invention.

### Brief Description of Drawings

[FIG. 1] FIG. 1 is a block diagram illustrating a physical configuration of a video collection system including a video collection device according to an embodiment of the present invention.
[FIG. 2A] FIG. 2A is a block diagram illustrating a configuration of a vehicle sensor of the present embodiment.
[FIG. 2B] FIG. 2B is a block diagram illustrating a configuration of an external sensor of the present embodiment.
[FIG. 2C] FIG. 2C is a block diagram illustrating a configuration of a host vehicle information provision device of the present embodiment.
[FIG. 2D] FIG. 2D is a block diagram illustrating a configuration of a vehicle video collection device of the present embodiment.
[FIG. 3] FIG. 3 is a block diagram illustrating a theoretical configuration of the vehicle video collection device of the present embodiment.
[FIG. 4] FIG. 4 is a flowchart of processing executed by a first event estimation unit of the present embodiment.
[FIG. 5] FIG. 5 is a flowchart of processing executed by a second event estimation unit of the present embodiment.
[FIG. 6] FIG. 6 is a flowchart of processing executed by an arbitration unit of the present embodiment.
[FIG. 7] FIG. 7 is a flowchart of processing executed by a video search unit of the present embodiment.

### Description of Embodiments

### <First Embodiment>

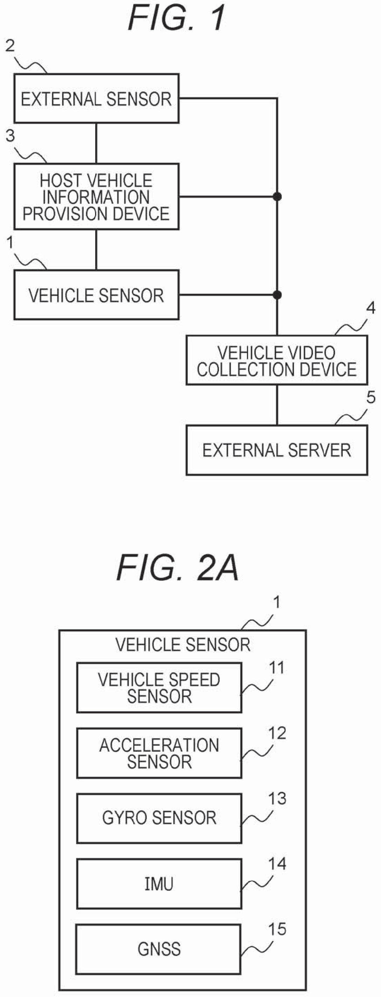

FIGS. 1 and 2A to 2D are block diagrams illustrating a configuration of a video collection system including a video collection device according to an embodiment of the present invention.

The video collection system of the present embodiment includes a vehicle sensor 1, an external sensor 2, a host vehicle information provision device 3, a vehicle video collection device 4, and an external server 5.

As illustrated in FIG. 2A, the vehicle sensor 1 is a sensor group that detects a state of the host vehicle, and measures information of the host vehicle such as a vehicle speed, an acceleration, an angular velocity, and a position such as latitude and longitude of the host vehicle. The vehicle sensor 1 includes, for example, a vehicle speed sensor 11 that measures a vehicle speed of the host vehicle, an acceleration sensor 12 that measures an acceleration of the host vehicle, a gyro sensor 13 that measures an acceleration of the host vehicle, an inertial measurement unit (IMU) 14 that measures an acceleration and an angular velocity of the host vehicle and estimates a posture of the host vehicle, and a global navigation satellite system (GNSS) 15 that measures a position of the host vehicle using a signal transmitted from an artificial satellite and outputs position information such as latitude and longitude. The output of the vehicle sensor 1 is output to the host vehicle information provision device 3 and the vehicle video collection device 4.

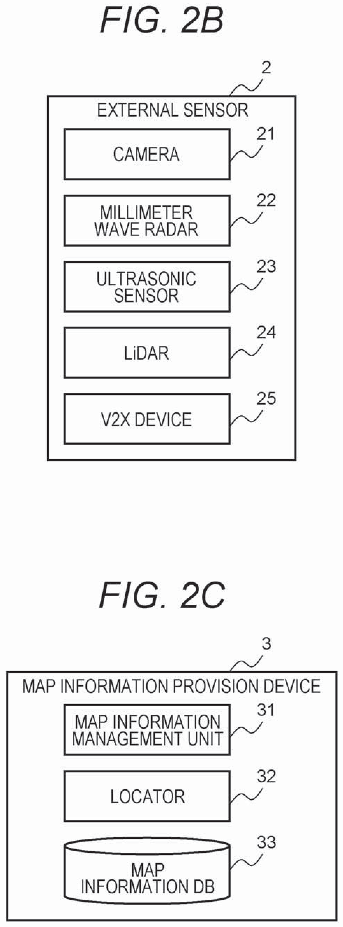

As illustrated in FIG. 2B, the external sensor 2 is a sensor group that detects the environment around the host vehicle, and measures the position, speed, type, and characteristics of surrounding objects, lane markings, road markings, and the like around the host vehicle. The external sensor 2 includes, for example, at least one of a camera 21 that captures a video of the surroundings of the host vehicle, a millimeter wave radar 22 that measures the reflection of the emitted electromagnetic wave to detect an object around the host vehicle, an ultrasonic sensor 23 that measures the reflection of the emitted ultrasonic wave to detect an object around the host vehicle, a LiDAR 24 that measures the reflection of the emitted laser light to detect an object around the host vehicle, and a V2X device 25 that acquires information of an environment detected by another vehicle, and desirably includes the camera 21. The output of the external sensor 2 is output to the host vehicle information provision device 3 and the vehicle video collection device 4. The camera 21 may be, for example, a drive recorder, a monocular camera, a stereo camera, a multi-camera that captures an around video around the host vehicle, an electronic mirror, or a far infrared camera that can capture a dark place in addition to daytime.

As illustrated in FIG. 2C, the host vehicle information provision device 3 acquires the vehicle speed, the acceleration, the posture, and the position information from the vehicle sensor 1. The host vehicle information provision device 3 includes a map information management unit 31, a locator 32, and a map information DB 33. The map information management unit 31 acquires, updates, and holds map information around the host vehicle on the basis of position information of the host vehicle acquired from the GNSS 15, the V2X device 25, and the like. At this time, the acquired map information is held in the map information DB 33. The locator 32 calculates the position and orientation of the host vehicle based on the vehicle speed, the acceleration, and the posture acquired from the vehicle sensor 1. In addition, the locator 32 may correct the position in the lane in which the host vehicle is present using information such as a lane marking and a road marking from the external sensor 2. The host vehicle information provision device 3 outputs map information including a lane marking, a road edge, a road marking, and a road sign on a traveling road surface of the host vehicle, and a position of the host vehicle.

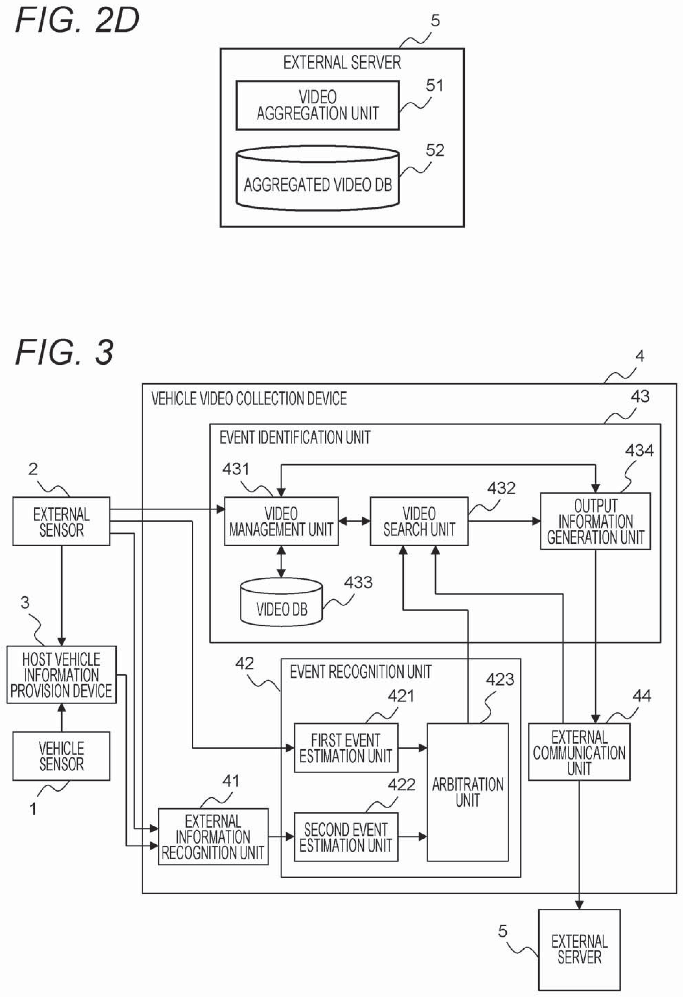

As illustrated in FIG. 2D, the vehicle video collection device 4 includes an external information recognition unit 41, an event recognition unit 42, an event identification unit 43, and an external communication unit 44. Details of each unit will be described later.

The external server 5 receives an event video transmitted from each vehicle, an event time, and target information. Furthermore, the external server 5 includes a video aggregation unit 51 and an aggregated video database 52, and collects information within a certain range and within a certain time.

The vehicle video collection device 4 is a control device including an arithmetic device, a storage device, and a communication interface. The arithmetic device is a processor (for example, a microcomputer) that executes a program stored in the storage device. The arithmetic device operates as a functional unit that provides various functions by executing a predetermined program. The storage device includes a non-volatile storage area and a volatile storage area. The non-volatile storage area includes a program area for storing a program executed by the arithmetic device and a data area for temporarily storing data used when the arithmetic device executes the program. The volatile storage area stores data used when the arithmetic device executes the program. The communication interface is connected to another electronic control device via a network such as CAN or Ethernet.

FIG. 3 is a block diagram illustrating a theoretical configuration of the vehicle video collection device 4 of the present embodiment.

The vehicle video collection device 4 includes an external information recognition unit 41, an event recognition unit 42, an event identification unit 43, and an external communication unit 44.

The external information recognition unit 41 receives the latitude, longitude, and speed of the host vehicle provided from the host vehicle information provision device, and the relative position and the relative speed of the target around the host vehicle detected by the external sensor 2 with respect to the host vehicle, and a target ID for uniquely specifying the target, converts the position of the target around the host vehicle into an absolute position represented by the latitude and longitude, and outputs target information around the host vehicle. When a plurality of detection results are input for the same target around the host vehicle, the external information recognition unit 41 may perform sensor fusion and integrate the plurality of detection results into one target. The target information around the host vehicle output from the external information recognition unit 41 includes, for example, a relative position, latitude/longitude, a relative speed, a target ID, and the like. The relative position may be expressed by a position in a host vehicle coordinate system with the center of the host vehicle as an origin.

The event recognition unit 42 includes a first event estimation unit 421, a second event estimation unit 422, and an arbitration unit 423. The event recognition unit 42 receives the target information output from the external information recognition unit 41 and the frame image output from the camera 21 included in the external sensor 2, determines the occurrence of an event, and specifies an event involved target related to the determined event. In the present embodiment, the event is mainly an automobile accident, and in addition, mischief to a vehicle, theft, a wrong-way-driving vehicle, a vehicle traveling on a sidewalk, a bicycle traveling on an automobile exclusive road, a suspicious person, and the like are also treated as the event. The automobile accident includes an accident in which a host vehicle and another vehicle are involved in addition to an accident between other vehicles. Note that the event recognition unit 42 includes the first event estimation unit 421 and the second event estimation unit 422 that estimate an event by different methods, but may include one event estimation unit. By including a plurality of event estimation units that presume an event by different methods, erroneous determination of an event can be prevented.

The first event estimation unit 421 refers to each frame output from the camera 21, determines the occurrence of an event by image recognition using artificial intelligence (AI) by a recognition model configured by a neural network, and outputs event participation possibility target information. The event participation possibility target information is information of a target that may be involved in the event. In addition, although image recognition is performed by AI, a recognition model by machine learning or a recognition model by deep learning may be used. This recognition model is preferably constructed by learning an image of an event (for example, an accident) labeled with a target (for example, an accident vehicle) involved in the event.

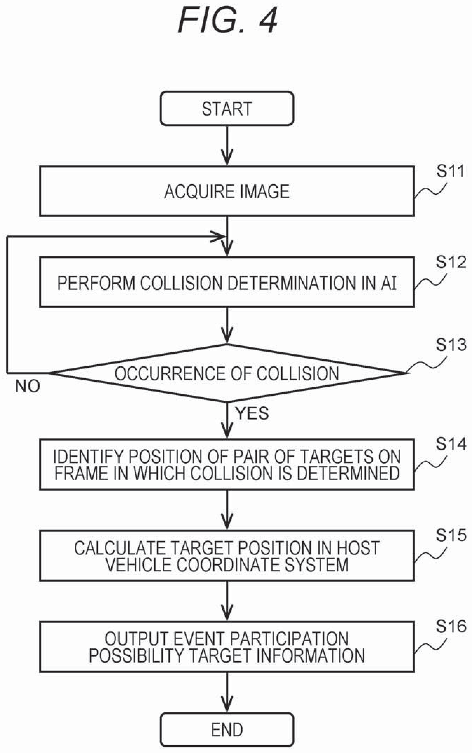

FIG. 4 is a flowchart of processing executed by the first event estimation unit 421 of the present embodiment. The processing illustrated in FIG. 4 will be described using an event of a collision accident as an example.

First, the first event estimation unit 421 acquires the video output from the camera 21 (S11).

Next, the first event estimation unit 421 uses the learned recognition model to determine whether there is a frame image corresponding to the collision accident among the frame images of the acquired video (S12). The collision accident determined in step S12 is a contact between two or more targets (for example, a vehicle and a vehicle, a vehicle and a pedestrian, a vehicle and a fixed installation object). Then, when no collision is detected in the frame image (NO in S13), the process returns to step S12 to determine a collision accident in the next frame image.

On the other hand, if a frame in which a collision accident has occurred is detected (YES in S13), the first event estimation unit 421 specifies a target involved in the collision accident from the frame, and calculates the position of each target on the frame image by using the specified target as one set (S14).

Then, the first event estimation unit 421 calculates the target position in the host vehicle coordinate system with the center of the host vehicle as the origin (S15).

Thereafter, the first event estimation unit 421 outputs information on the target for which a collision is determined as event participation possibility target information. The event participation possibility target information outputs the relative position between the host vehicle and the target, the position of the target on the frame image, and the event factor occurrence possibility time which is the time of the first frame in which the collision is determined (S16). The processing of the first event estimation unit 421 has been described above.

The second event estimation unit 422 refers to the target information output by the external information recognition unit 41, determines a target collision on a rule basis, and outputs the event participation possibility target information.

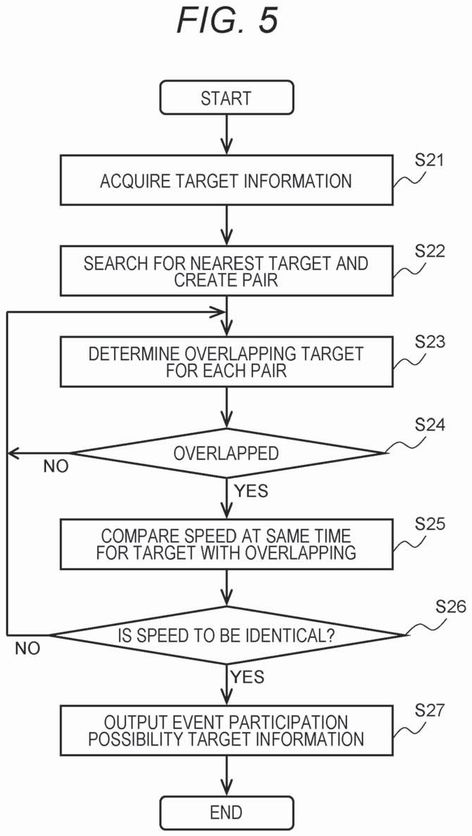

FIG. 5 is a flowchart of processing executed by the second event estimation unit 422 of the present embodiment. The processing illustrated in FIG. 5 will be described using an event of a collision accident as an example.

First, the second event estimation unit 422 acquires target information output from the external information recognition unit 41 (S21), searches for a target closest to each target represented in the host vehicle coordinate system, and creates a pair of targets (S22). For example, the center positions of two targets may be compared to search for a target at a short distance. The center position of the target may be geometrically calculated from a polygon such as a rectangle containing the target, or may be calculated using a size determined by a type of the target and a contour of the target. In addition, a target at a distance closer to a distance of a polygonal outline such as a rectangle enclosing each target may be searched.

Next, the second event estimation unit 422 determines whether the outer shapes of the targets of each pair overlap (S23). For example, the outer shape of the target may be a polygon such as a rectangle that encloses the target.

When the polygons representing the target overlap (YES in S24), the second event estimation unit 422 determines that there is a possibility of collision and calculates the speeds of the two targets (S25). Then, the speeds of the overlapped targets during the respective processing periods are compared, and when the ratio between the absolute values of the speeds of the two targets at the same time and the absolute value of the speed of one vehicle becomes a predetermined range close to 1 (for example, within 5%) (YES in S26), it is determined that there is a collision. In step S26, it is determined that the speeds of the two targets are close to each other, but the collision may be determined by a sudden change in which the speed of the target exceeds the range of maximum braking and maximum acceleration.

On the other hand, when the polygons representing the target do not overlap (NO in S24) or when the polygons representing the target overlap (NO in S26), the process returns to step S23, and the overlap is determined for the next pair of targets.

Then, in a case where it is determined that there is a collision, the second event estimation unit 422 records the time when it is determined that there is a collision, and outputs the targets determined to have a collision as the event participation possibility targets. The event participation possibility target preferably includes a relative position with respect to the host vehicle, a position of the target (for example, latitude and longitude), and a time and a speed at which the collision is determined. (S27) The processing of the second event estimation unit 422 has been described above.

The arbitration unit 423 receives the output results of the first event estimation unit 421 and the second event estimation unit 422, determines whether an event (for example, a collision accident) has occurred, and integrates and outputs the event participation possibility target information from the first event estimation unit 421 and the second event estimation unit 422 when it is determined as a collision accident.

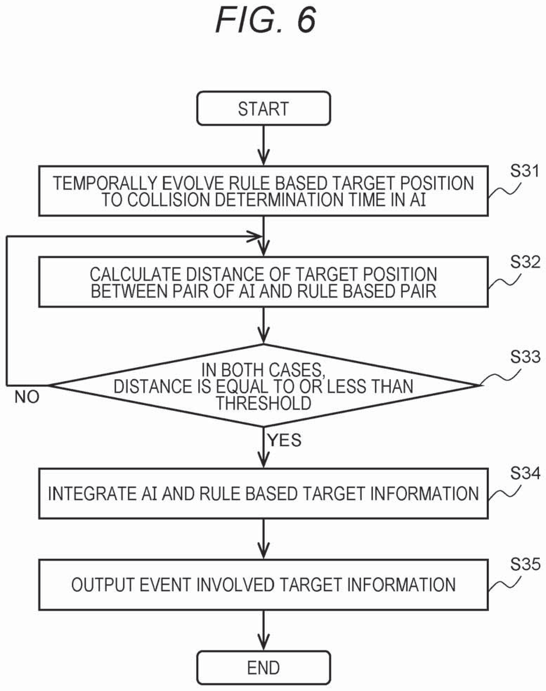

FIG. 6 is a flowchart of processing executed by the arbitration unit 423 of the present embodiment.

First, the arbitration unit 423 temporally evolves the relative coordinates from the center of the host vehicle of the event involved target determined on a rule basis received from the second event estimation unit 422 to the time of the first frame in which the collision is determined by the first event estimation unit 421. The time evolution is, for example, processing of reflecting a host vehicle movement amount of a time during which the host vehicle moves from when the sensor detects the target to when the sensor is processed in the host vehicle on the position of the detected target. In step S31, when there is a time difference between the time at which it is determined that there is a collision, which is output from the second event estimation unit 422 instead of the time at which the sensor detects the target, and the time of the first frame at which it is determined that there is a collision, which is output from the first event estimation unit 421, the movement amount of the host vehicle is calculated by multiplying the speed of the host vehicle and the time difference therebetween. Then, the arbitration unit 423 adds the relative position with the host vehicle output from the second event estimation unit 422 and the calculated movement amount of the host vehicle, and can compare the target information output from the second event estimation unit 422 with the target information output from the first event estimation unit 421 on the same time axis (S31).

Next, the arbitration unit 423 compares the position by the first event estimation unit 421 with the position by the second event estimation unit 422 for the same target. For example, the distance between the center positions of the two targets may be calculated to compare the positions (S32).

When the position difference between the two targets is equal to or smaller than the predetermined threshold (YES in S33), the arbitration unit 423 integrates the target information by the first event estimation unit 421 and the target information by the time-evolved second event estimation unit 422 (S34).

Finally, the relative position between the host vehicle and the target, the absolute position (latitude/longitude) of the target, the position of the target on the frame, the time of the first frame in which the target is determined to collide, and the speed of the target of each event involved target are output (S35). The processing of the arbitration unit 423 has been described above.

The event identification unit 43 includes a video management unit 431, a video search unit 432, a video database 433, and an output information generation unit 434. The event identification unit 43 constantly records the video around the host vehicle, manages the video, and protects the event video for a specific time. Then, the event video, the event time, and the target information are output to the external communication unit 44.

The video management unit 431 accumulates the video around the host vehicle input from the camera 21 in the video database 433 and constantly records the video. Further, when receiving the request for the video in the specific time period from the video search unit 432, the video management unit 431 outputs the frame in the specific time period to the video search unit 432. Further, in a case where a request for protection of the video in the specific time period is received from the video search unit 432, the video in the video database 433 is protected so as not to be deleted, and in a case where a request for protection release is received, the protection of the video between the specified frames is released. For example, the external communication unit 44 requests protection release of the video in the specific time period transmitted to the external server 5. Further, when the storage area of the video database 433 is full of the video data and the video data cannot be written any more, it is preferable to have a function of deleting the video at the old time so that the video at the new time can be written.

Based on the event involved target information output from the arbitration unit 423 of the event recognition unit 42, the video search unit 432 acquires the video in the specific time period from the specific time to a time a predetermined time backward from the specific time from the video database 433.

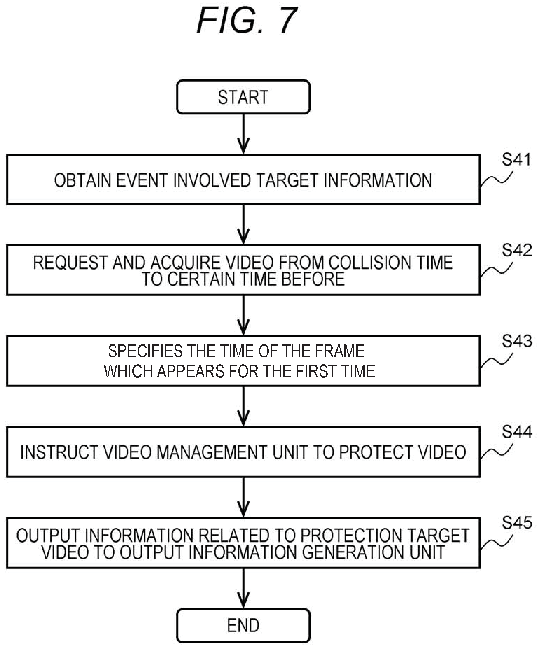

FIG. 7 is a flowchart of processing executed by the video search unit 432 of the present embodiment.

First, the video search unit 432 acquires the event involved target information from the arbitration unit 423 (S41).

Next, the video search unit 432 acquires, from the video database 433 through the video management unit 431, videos from the time a predetermined time backward to the time of the first frame determined as a collision in the event involved target information (S42). The predetermined time may be set to, for example, 20 minutes, or may be changed according to the size of the storage capacity of the video database 433.

Thereafter, the video search unit 432 searches each of the frames of the acquired video for a frame in which the event involved target output from the arbitration unit 423 appears for the first time, and specifies the time of the frame (S43).

Then, the video search unit 432 designates the video from the time at which the event involved target appears for the first time to the time of the first frame determined as a collision as the protection target video, and instructs the video management unit 431 on a request for protection so that the protection target video is not deleted (S44). For example, a flag indicating that deletion cannot be performed may be attached to the protection target video, or the protection target video may be stored in the protection area where data erasability cannot be performed.

Then, the video search unit 432 outputs information related to the protection target video to the output information generation unit 434 (S45), which is used as upload information. The information related to the protection target video includes, for each target of the event involved target information output from the arbitration unit 423, a relative position with respect to the host vehicle, a position (latitude/longitude) of the target, a speed of the target, a time of a first frame at which it is determined that there is a collision, and a time at which the event involved target appears for the first time. The above is the processing of the video search unit 432.

The external communication unit 44 outputs the upload information output from the output information generation unit 434 to the external server 5. When the upload is successful, the video search unit 432 is requested to release the protection of the protection target video. In response to the data output to the external server 5 and the video protection release request, the processing executed by the vehicle video collection device ends.

The external server 5 includes a video aggregation unit 51 and an aggregated video database 52. The video aggregation unit 51 aggregates upload information that can be determined to be identical on the basis of position information (latitude/longitude) included in the uploaded video, and records the aggregated video information in the aggregated video database 52. The external server 5 may distribute the aggregated information not only to the owner of the vehicle or the like involved in the event but also to an organization utilizing accident information such as a police department or an insurance company.

The above is the description of the embodiments of the present invention.

As described above, according to the embodiment of the present invention, it is possible to specify an accident involved target from a video at the time of occurrence of an accident, and protect a video from an occurrence timing of an accident factor to an accident to a minimum necessary extent, or protect a video within an appropriate range including a minimum necessary range.

Note that the present invention is not limited to the above-described embodiments, and includes various modifications and equivalent configurations within the spirit of the appended claims. For example, the above-described embodiments have been described in detail in order to describe the present invention in an easy-to-understand manner, and the present invention is not necessarily limited to those having all the described configurations. Further, a part of the configuration of a certain embodiment may be replaced with the configuration of another embodiment. In addition, the configuration of another embodiment may be added to the configuration of a certain embodiment. Furthermore, it is possible to add, delete, and replace other configurations for a part of the configuration of each embodiment.

In addition, a part or all of the above-described configurations, functions, processing units, processing means, and the like may be realized by hardware by, for example, designing with an integrated circuit, or may be realized by software by a processor interpreting and executing a program for realizing each function.

Information such as a program, a table, and a file for realizing each function can be stored in a storage device such as a memory, a hard disk, and a solid state drive (SSD), or a recording medium such as an IC card, an SD card, and a DVD.

In addition, the control lines and information lines indicate what is considered to be necessary for the description, and do not necessarily indicate all the control lines and information lines necessary for mounting. In practice, it may be considered that almost all the configurations are connected to each other.

## Claims

1. A video collection device, comprising:
an arithmetic device that executes arithmetic processing; and
a storage unit that can be accessed by the arithmetic device, wherein
the arithmetic device includes an event recognition unit configured to recognize an event that has occurred around a host vehicle and an event involved target involved in the event, and
the arithmetic device includes an event identification unit configured to protect, as an event video, a video recorded from an event factor occurrence time at which the event involved target has appeared retroactively from a time at which the event has occurred to a time at which the event has occurred, among videos recording surroundings of the host vehicle captured by an imaging device mounted on the host vehicle.

2. The video collection device according to claim 1, wherein
the event recognition unit includes:
a first event estimation unit configured to estimate occurrence of an event using a recognition model learned from an image in which the event has occurred;
a second event estimation unit configured to estimate occurrence of the event based on target information including a position and a speed of at least a target acquired by an external sensor mounted on the host vehicle; and
an arbitration unit configured to output event participation possibility target information related to the event integrated based on a first estimation result by the first event estimation unit and a second estimation result by the second event estimation unit.

3. The video collection device according to claim 1, wherein
the event identification unit includes:
a video search unit configured to search for the event factor occurrence time from the recorded video; and
a video management unit configured to record and manage the video, protect the event video based on a protection request of the event video from the video search unit, and delete the event video transmitted to a server provided outside the host vehicle.

4. The video collection device according to claim 1, comprising:
an external communication unit configured to transmit the event video protected by the event identification unit to a server provided outside the host vehicle.

5. A video collection system, comprising:
a video collection device; and
a video collection server, wherein
the video collection device includes a first arithmetic device that executes arithmetic processing and a first storage unit that can be accessed by the first arithmetic device,
the first arithmetic device includes:
an event recognition unit configured to recognize an event occurring around a host vehicle and an event involved target involved in an event;
an event identification unit configured to protect, as an event video, a video recorded from an event factor occurrence time at which the event involved target has appeared retroactively from a time at which the event has occurred to a time at which the event has occurred, among videos obtained by recording surroundings of the host vehicle captured by an imaging device mounted on the host vehicle; and
an external communication unit configured to transmit the event video protected by the event identification unit to a server provided outside the host vehicle.

6. The video collection system according to claim 5, wherein
the server includes:
a second arithmetic device that executes arithmetic processing, and a second storage unit that can be accessed by the second arithmetic device, and
the second arithmetic device includes a video aggregation unit that aggregates the event videos transmitted from a plurality of vehicles including the host vehicle for each of the events at a same time and at a same place.
